# FASCICULE DE BREVET EUROPEEN

(11) **EP 2 818 780 B1**
(45) Date de publication et mention de la délivrance du brevet: **16.11.2016**
(21) Numéro de dépôt: 14001990.2
(22) Date de dépôt: 10.06.2014
(51) Int. Cl.: F16L 23/024, F16L 33/02, B64D 37/08, B65D 88/54, B60R 16/027, H01R 35/02, H01R 35/04, F16L 13/10, F16L 23/04

(54) **SYSTÈME DE STOCKAGE DE CARBURANT À RÉSERVOIRS RACCORDÉS PAR CONDUITES SOUPLES**
KRAFTSTOFFTANKSYSTEM MIT DURCH SCHLAUCHLEITUNGEN VERBUNDENEN BEHÄLTERN
FUEL STORAGE SYSTEM WITH TANKS COUPLED BY FLEXIBLE LINES

(30) Priorité: 28.06.2013 FR 1301519
(43) Date de publication de la demande: 31.12.2014
(73) Titulaire: Airbus Helicopters, 13725 Marignane Cedex (FR)
(72) Inventeur: Bornes, Sylvain, 13111 Coudoux (FR)
(74) Mandataire: GPI & Associés

(56) Documents cités:
- DE-A1- 4 108 894
- FR-A- 917 636
- FR-A1- 2 456 277

## Description

La présente invention se situe dans le domaine du stockage et du transfert de fluides, en particulier de liquides.

La présente invention concerne de manière générale un système de stockage de carburant comportant un dispositif de raccordement démontable entre deux conduites souples, ce dispositif de raccordement démontable étant plus particulièrement destiné à relier un réservoir à carburant d'un aéronef et une conduite ou bien à relier deux réservoirs d'un aéronef.

La présente invention concerne également un aéronef utilisant un tel système de stockage de carburant.

Il est en effet fréquent, dans les aéronefs et notamment dans les aéronefs à voilure tournante, de disposer de plusieurs réservoirs de carburant. Ces réservoirs sont généralement souples et logés dans des compartiments séparés par des cloisons structurelles. Ces compartiments et ces cloisons structurelles peuvent être situés dans une structure inférieure de l'aéronef, par exemple en dessous du plancher de la cabine de cet aéronef ou bien dans des structures verticales de l'aéronef, telles que des cloisons transversales ou latérales.

De plus, ces réservoirs peuvent être reliés entre eux afin de permettre la circulation du carburant. Une liaison entre deux réservoirs est souvent obtenue en équipant chaque réservoir d'une conduite souple, ces deux conduites souples étant alors raccordées l'une à l'autre. Le raccordement des deux conduites est généralement situé à l'intérieur d'un des deux réservoirs, la conduite de ce réservoir étant repliée vers l'intérieur de ce réservoir alors que la conduite de l'autre réservoir traverse la cloison structurelle de l'aéronef séparant les deux réservoirs.

Un tel raccordement entre deux réservoirs ou bien entre un réservoir et une canalisation est décrit dans le document FR 2456277. Ce raccordement est réalisé en solidarisant deux conduites l'une à l'autre par un collier de serrage, un manchon métallique étant positionné à l'intérieur des conduites afin de rigidifier le raccordement. De plus, les deux conduites sont appliquées l'une contre l'autre sans collage.

Cet état de la technique divulgue le préambule de la revendication 1.

Il est également possible de lubrifier la liaison entre les deux conduites avec du carburant. Cette lubrification permet ainsi un léger glissement d'une conduite par rapport à l'autre.

Les conduites souples sont généralement en élastomère adapté au transport des hydrocarbures et peuvent comporter une armature noyée dans leur paroi.

De plus, selon le document CA 2176822, le raccordement entre un tuyau cylindrique mâle rigide et un dispositif femelle est réalisé par un raccord rapide comportant un moyen déformable et un moyen rigide. Des pattes de ce moyen déformable font office de butées axiales en coopérant avec des rainures du dispositif femelle. Deux joints toriques positionnés radialement entre le tuyau cylindrique mâle et le dispositif femelle assurent l'étanchéité du raccordement.

En outre, le document US 7878550 décrit un manchon reliant deux conduites, ce manchon comportant une première extrémité souple, une seconde extrémité semi-rigide, sa partie médiane étant éventuellement souple. Chaque extrémité est respectivement fixée mécaniquement à une des deux conduites, sans être collée.

Par ailleurs, un raccordement entre deux conduites reliant deux réservoirs d'un aéronef doit également être résistant à une certaine intensité de chocs et d'accidents que peut subir l'aéronef. Ainsi, ce raccordement entre deux conduites doit être susceptible de recevoir des chocs et permettre des déplacements des conduites et/ou des réservoirs dès lors que ces chocs et ces déplacements sont d'une intensité ou d'une amplitude inférieure à des limites prédéterminées. Il ne faut pas que de tels chocs ou de tels déplacements provoquent une rupture de ce raccordement ou bien la déchirure de l'un et/ou l'autre des deux conduites.

Dans ce but, ce raccordement entre deux conduites est librement mobile pour diminuer les concentrations de contraintes qui se formeraient à cet endroit lors de chocs et/ou de déplacements.

En outre, l'accès à ce type de raccordement, pour son montage, son démontage et sa maintenance, se fait généralement par l'intérieur de la cabine après démontage du plancher, par l'intermédiaire d'un orifice de visite du réservoir.

Le montage et plus particulièrement le démontage d'un tel raccordement peut être délicat et complexe. En effet, les deux conduites ont tendance à adhérer l'une à l'autre après séchage du carburant utilisé pour lubrifier ce raccordement. De fait, il existe un risque important de déchirer au moins une des deux conduites lors de ce démontage, si bien qu'une opération de maintenance peut conduire à la destruction d'au moins un réservoir.

La présente invention a alors pour objet de proposer un système de stockage de carburant comportant un dispositif de raccordement entre deux réservoirs permettant de s'affranchir des limitations mentionnées ci-dessus. Ce dispositif de raccordement est ainsi facilement démontable afin de supprimer tout risque de déchirure au cours d'une opération de maintenance, tout en présentant les mêmes caractéristiques d'étanchéité et de tenue aux chocs.

Selon l'invention, un dispositif de raccordement démontable relie deux conduites souples entre elles.

Ce dispositif de raccordement démontable est remarquable en ce qu'il comporte deux embases, chaque embase étant apte à être solidarisée respectivement avec une des deux conduites souples par au moins un moyen de solidarisation. Ces embases sont assemblées mécaniquement l'une à l'autre par au moins un moyen de fixation démontable et l'étanchéité entre les deux embases est assurée par au moins un joint.

Chaque embase qui est apte à être solidarisée respectivement avec une des deux conduites souples a une forme générale équivalente à la conduite avec laquelle elle est solidarisée. Par exemple, chaque conduite est cylindrique de section circulaire et, par suite, chaque embase a une forme générale cylindrique de section circulaire.

Cependant, d'autres sections de conduites et, par suite, d'embases sont possibles, telles qu'une section ovale par exemple.

De préférence, ces conduites sont concentriques. Dans le cas où les conduites ne sont pas concentriques, les embases prennent en compte les différences géométriques de ces conduites et notamment le décalage de leurs axes.

Un premier moyen de solidarisation de chaque embase avec une conduite est de préférence le collage. Chaque embase peut être collée sur la surface interne ou externe de la conduite correspondante.

La colle utilisée pour constituer ce premier moyen de solidarisation est totalement compatible avec le fluide circulant dans la conduite tel que du carburant par exemple.

De plus, la surface de solidarisation entre une embase et une conduite peut être plus ou moins importante, pour par exemple avoir une tenue de cette solidarisation suffisante ou bien augmenter la rigidité de cette liaison embase-conduite.

En outre, les embases sont de préférence rigides, par exemple les embases sont métalliques. Notamment, une des deux embases du conduit interne peut faire office de manchon pour assurer la rigidité de l'assemblage de la liaison. Dans ce but, au moins une des embases doit avoir une longueur suffisante afin d'assurer cette rigidité.

Chaque conduite peut comporter à une extrémité une zone droite. C'est sur cette zone droite de la conduite que l'embase est solidarisée avec cette conduite.

Par ailleurs, un second moyen de solidarisation d'une conduite avec une embase peut être utilisé en lieu et place du premier moyen de solidarisation, c'est-à-dire le collage ou bien en complément de ce premier moyen de solidarisation. Par exemple, ce second moyen de solidarisation est un collier de serrage mis en place autour de l'ensemble constitué par une conduite et une embase.

Dans ce cas d'utilisation d'un collier de serrage en tant que second moyen de solidarisation, chaque embase doit être rigide et positionnée à l'intérieur de la conduite avec laquelle elle est solidarisée, ce collier de serrage étant alors positionné à l'extérieur de cette conduite.

Les deux embases sont assemblées par au moins un moyen de fixation démontable. De fait, les embases sont facilement démontables afin de désolidariser les deux conduites pour, par exemple, réaliser des opérations de maintenance. Par exemple, un moyen de fixation démontable est une vis, un taraudage étant présent dans une première embase et la seconde embase étant alors serrée sur cette première embase par l'intermédiaire de cette vis et de ce taraudage.

En conséquence, les deux embases étant assemblées par l'intermédiaire du moyen de fixation démontable, le dispositif de raccordement démontable selon l'invention supprime avantageusement tout contact entre les deux conduites reliées par ce dispositif. De fait, un jeu non nul est présent entre les deux conduites et tout risque d'adhérence et, par suite, tout risque de déchirure au démontage d'au moins une des conduites, sont supprimés.

De plus, l'utilisation d'au moins un moyen de fixation démontable entre les deux embases apporte de la rigidité à l'assemblage de ces deux embases et, par suite, au dispositif de raccordement selon l'invention. Avantageusement, cette rigidité est obtenue sans pour autant porter préjudice à la souplesse nécessaire de l'assemblage des deux conduites. En effet, ces deux conduites sont souples et peuvent, bien qu'elles soient reliées par les deux embases, recevoir des chocs et se déplacer légèrement sans provoquer de rupture de ce dispositif de raccordement ou bien de déchirure d'une des deux conduites.

En outre, un ou plusieurs joints peuvent être placés entre les deux embases afin d'assurer l'étanchéité de ce dispositif de raccordement. Avantageusement, chaque joint est simple à remplacer.

Par exemple, un joint plat peut être placé sur une surface plane d'une première embase, la seconde embase venant alors écraser ce joint plat lors de l'assemblage des deux embases.

Selon un autre exemple, un ou plusieurs joints toriques peuvent être placés dans une gorge agencée sur une première embase. La seconde embase vient alors écraser chaque joint torique lors de l'assemblage des deux embases afin d'assurer l'étanchéité de ce dispositif de raccordement.

Ainsi, toute maintenance du dispositif de raccordement selon l'invention est facilitée et est sans effet sur les caractéristiques du dispositif de raccordement selon l'invention. Le montage et le démontage des embases et, par suite, des conduites, sont aisés grâce à l'utilisation d'au moins un moyen de fixation démontable. De plus, l'étanchéité de ce dispositif de raccordement est assurée par le ou les joints simples à remplacer. Enfin, les qualités de tenue aux chocs du dispositif de raccordement sont conservées.

La présente invention a donc pour objet un système de stockage de carburant comportant au moins deux réservoirs, chaque réservoir disposant d'au moins une conduite souple. Un tel système de stockage de carburant comporte au moins un dispositif de raccordement démontable tel que précédemment décrit reliant deux réservoirs par l'intermédiaire de deux conduites souples.

Avantageusement, l'utilisation d'un tel dispositif de raccordement démontable dans ce système de stockage de carburant permet de faciliter ce raccordement.

En effet, les embases de ce dispositif de raccordement peuvent être solidarisées sur une conduite indépendamment pour chaque réservoir. De fait, cette opération de solidarisation peut être réalisée sans contrainte de présence ou de proximité d'un autre réservoir.

Par suite, seul l'assemblage final des deux embases par l'intermédiaire d'au moins un moyen de fixation démontable est réalisé avec ces contraintes de présence ou de proximité d'un autre réservoir.

De plus, cette opération d'assemblage est également simplifiée par l'utilisation de moyens de fixation démontables tels que des vis.

La présente invention a aussi pour objet un aéronef comportant au moins un système de stockage de carburant tel que précédemment évoqué.

Cet aéronef comporte au moins deux compartiments séparés par au moins une cloison structurelle. Ces compartiments et ces cloisons structurelles peuvent être situés dans une structure inférieure de l'aéronef placée sous une cabine de l'aéronef, le plancher de cette cabine recouvrant cette structure inférieure. Ces compartiments et ces cloisons structurelles peuvent également être situés dans une ou plusieurs structures verticales de l'aéronef, telle que des cloisons transversales ou latérales. Chaque compartiment peut comporter au moins un réservoir du système de stockage de carburant. Deux réservoirs peuvent ainsi être reliés par l'intermédiaire d'un dispositif de raccordement démontable précédemment décrit, notamment au travers d'un orifice d'une cloison structurelle.

Avantageusement, quel que soit le ou les moyens de solidarisation d'une conduite sur une embase de ce dispositif de raccordement démontable, cette opération de solidarisation peut être réalisée hors de l'aéronef, chaque réservoir pouvant être déployé à l'extérieur de l'aéronef. Cette opération est ainsi réalisable sans difficulté directement sur une conduite et indépendamment pour chaque réservoir. De fait, cette solidarisation peut être réalisée sans contrainte de présence ou de proximité d'un autre réservoir.

Ensuite, les réservoirs sont mis en place dans les compartiments de l'aéronef. Dans un souci d'optimisation de l'encombrement des réservoirs et de leur raccordement, chaque dispositif de raccordement démontable peut être placé à l'intérieur d'un réservoir.

Dans ce but, la conduite de ce premier réservoir est repliée à l'intérieur de ce premier réservoir et la conduite d'un second réservoir est également positionnée à l'intérieur de ce premier réservoir. L'assemblage de ces deux conduites, par l'intermédiaire des deux embases du dispositif de raccordement et d'au moins un moyen de fixation démontable est alors réalisé par l'intérieur de la cabine, généralement par l'intermédiaire d'un orifice de visite de ce premier réservoir. De la sorte, une des deux conduites se trouve à l'intérieur de l'autre conduite. L'utilisation de moyens de fixation démontables tels que des vis, facilite cet assemblage malgré les difficultés d'accès par cet orifice de visite.

De même, l'accès à ce type de raccordement pour sa maintenance se fait généralement par l'intérieur de la cabine après démontage du plancher. L'utilisation de dispositifs de raccordement démontables dans l'aéronef selon l'invention permet d'en faciliter la maintenance.

Avantageusement, l'assemblage de ces réservoirs bien que simplifié ne remet pas en cause la tenue des conduites et des réservoirs aux chocs et aux accidents comme cité précédemment.

En effet, la souplesse des conduites souples permet, lors d'un accident de l'aéronef par exemple, des déplacements des conduites et/ou des réservoirs pour éviter l'apparition de contraintes importantes, de ruptures d'un dispositif de raccordement démontable ou bien de déchirures des réservoirs ou des conduites.

De plus, les embases permettent, par leur rigidité, d'améliorer cette tenue des conduites aux chocs et aux accidents. Par exemple, lorsqu'une conduite traverse une cloison structurelle, la longueur d'une embase peut être suffisante pour que cette embase dépasse de part et d'autre d'un orifice de la cloison structurelle. Ensuite, lors d'un choc et, par suite, du déplacement de cette conduite ou bien de la déformation de la cloison structurelle, la rigidité de cette embase d'éviter la détérioration, voire la destruction de cette conduite.

L'invention et ses avantages apparaîtront avec plus de détails dans le cadre de la description qui suit avec des exemples de réalisation donnés à titre illustratif en référence aux figures annexées qui représentent :
- la figure 1, un aéronef selon l'invention équipé d'un système de stockage de carburant,
- la figure 2, un système de stockage de carburant équipé de dispositifs de raccordement démontables, et
- les figures 3 et 4, deux modes de réalisation d'un dispositif de raccordement démontables.

Les éléments présents dans plusieurs figures distinctes sont affectés d'une seule et même référence.

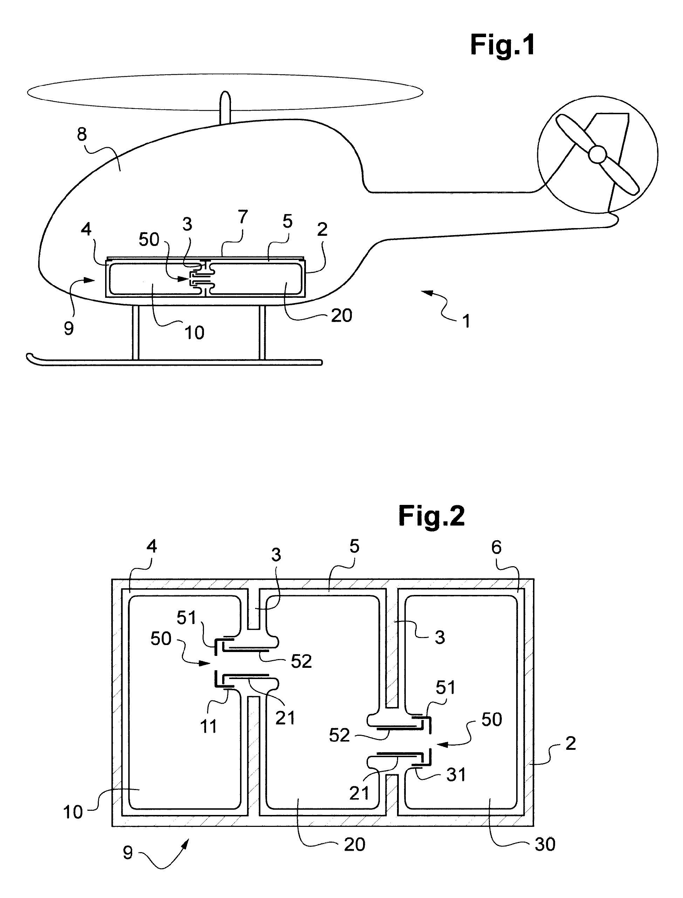

Sur la figure 1, un aéronef 1 est représenté, cet aéronef 1 comprenant une structure inférieure 2 en dessous d'une cabine 8. Cette structure inférieure 2 comporte deux compartiments 4,5 séparés par une cloison structurelle 3. Dans chaque compartiment 4,5 est disposé un réservoir 10,20, les deux réservoirs 10,20 formant un système de stockage de carburant 9. Un plancher 7 recouvre la structure inférieure 2 protégeant ainsi les réservoirs 10,20 et constitue le plancher de la cabine 8 de l'aéronef 1. Un dispositif de raccordement démontable 50 selon l'invention relie les deux réservoirs 10,20 à travers la cloison structurelle 3.

Cependant, ces compartiments 4,5 peuvent également être situés dans une ou plusieurs structures verticales de l'aéronef 1, telle que des cloisons transversales ou latérales.

La figure 2 représente un système de stockage de carburant 9 comportant trois réservoirs 10,20,30. Ce système de stockage de carburant 9 est positionné dans une structure inférieure 2 comportant trois compartiments 4,5,6, chaque compartiment 4,5,6 contenant un seul réservoir 10,20,30, deux cloisons structurelles 3 séparant respectivement deux compartiments 4,5,6. Un dispositif de raccordement démontable 50 selon l'invention relie les réservoirs 10,20,30 deux à deux à travers chaque cloison structurelle 3.

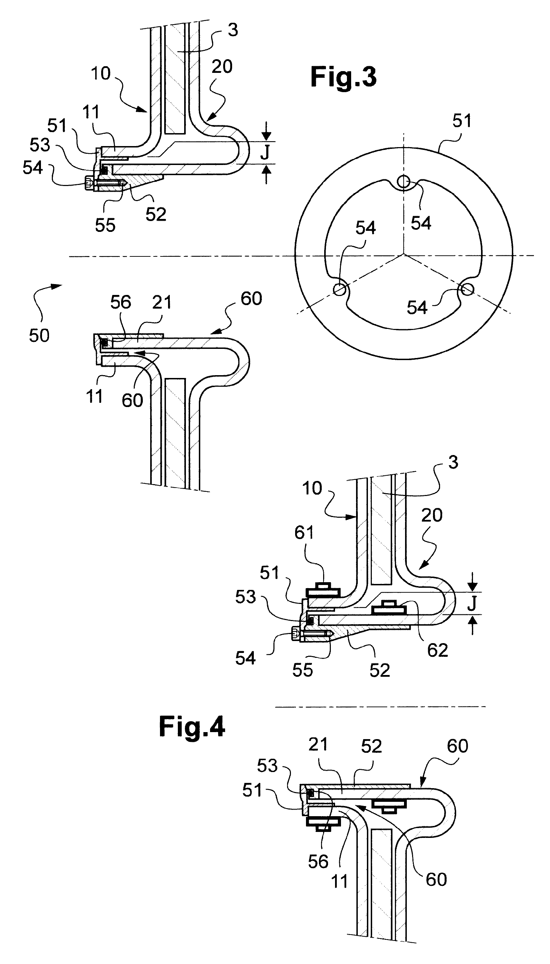

Deux modes de réalisation de ce dispositif de raccordement démontable 50 sont représentés sur les figures 3 et 4. Ces deux modes de réalisation de l'invention peuvent être utilisés pour relier les réservoirs 10,20,30 représentés sur les figures 1 et 2, ces deux réservoirs étant séparés par une cloison structurelle 3.

Ces deux modes de réalisation permettent de relier deux conduites 11,21 souples appartenant respectivement à deux réservoirs 10,20. Le dispositif de raccordement démontable 50 est situé à l'intérieur d'un premier réservoir 10 afin d'optimiser avantageusement le volume occupé par ces réservoirs 10,20 et, par suite, le volume nécessaire au système de stockage de carburant 9. Les conduites 11,21 sont de forme cylindrique à section circulaire bien que d'autres sections soient envisageables, telle qu'une section ovale. De plus, les conduites 11,21 sont concentriques.

La conduite 11 reliée au premier réservoir 10 est donc repliée à l'intérieur de ce premier réservoir 10 alors que la conduite 21 reliée au second réservoir 20 s'étend à l'extérieur de ce second réservoir 20 vers l'intérieur du premier réservoir 10. La seconde conduite 21 traverse la cloison structurelle 3. De la sorte, la conduite 21 reliée au second réservoir 20 se trouve à l'intérieur de la conduite 11 reliée au premier réservoir 10.

De plus, un joint 53, tel un joint torique, est positionné dans une gorge 56 agencée sur une première embase 52. La seconde embase 51 vient alors écraser ce joint 53 lors de l'assemblage des deux embases 51,52 assurant ainsi l'étanchéité de ce dispositif de raccordement démontable 50.

Cependant, un joint plat peut également être utilisé et placé sur une surface plane d'une première embase 52, la seconde embase 51 venant alors écraser ce joint plat lors de l'assemblage des deux embases 51,52.

Selon un premier mode de réalisation de ce dispositif de raccordement démontable 50 représenté sur la figure 3, le dispositif de raccordement démontable 50 comporte deux embases 51,52 solidarisées respectivement avec une conduite 11,21 par un moyen de solidarisation tel que le collage 60. Chaque embase 51 ,52 est collée respectivement à la surface intérieure d'une conduite 11,21, mais chaque embase 51,52 peut également être collée sur la surface extérieure d'une conduite 11,21.

Les deux embases 51,52 sont assemblées l'une à l'autre par l'intermédiaire d'au moins un moyen de fixation démontable. Les moyens de fixation démontables de ce premier mode de réalisation sont trois vis 54, une première embase 52 étant munie de trois taraudages 55 et une seconde embase 51 étant fixée sur la première embase 52 par l'intermédiaire des trois vis 54.

Chaque conduite 11,21 comporte à une extrémité une zone droite sur laquelle chaque embase 51,52 est respectivement collée. De plus, chaque embase 51,52 est rigide. Par exemple, chaque embase 51 ,52 est métallique. De fait, l'ensemble constitué par une conduite 11,21 et une embase 51,52 est ainsi rigide, bien que chaque conduite 11,21 soit souple.

Le dispositif de raccordement démontable 50 constitué par les deux embases 51 ,52 assemblées par les moyens de fixation démontables est ainsi rigide. Cette rigidité permet de faciliter l'assemblage de ce dispositif de raccordement démontable 50, sans dégrader pour autant la tenue aux chocs du dispositif de raccordement selon l'invention.

En effet, la souplesse des conduites 11,21 permet, lors d'un accident de l'aéronef 1 par exemple, des déplacements des conduites 11,21 et/ou des réservoirs 10,20 afin d'éviter l'apparition de contraintes importantes, de rupture du dispositif de raccordement démontable 50 ou bien de déchirures des réservoirs 10,20 ou des conduites 11,21.

Avantageusement, l'assemblage de ce dispositif de raccordement démontable 50 est également facilité, chaque embase 51,52 pouvant en effet être assemblée sur chaque conduite 11,21 indépendamment pour chaque réservoir 10,20.

Ensuite, l'assemblage des deux embases 51,52, par l'intermédiaire des vis 54 constituant les moyens de fixation démontables est alors réalisé par l'intérieur de la cabine 8, généralement par l'intermédiaire d'un orifice de visite de ce premier réservoir 10. L'utilisation de ces vis 54 facilite cet assemblage malgré les difficultés d'accès par cet orifice de visite.

Par suite, les opérations de maintenance sont facilitées, les deux conduites 11,21 pouvant alors facilement être désolidarisées.

Avantageusement, les deux embases 51,52 étant assemblées par l'intermédiaire du moyen de fixation démontable, aucun contact entre les deux conduites 11,21 n'est présent. De fait, un jeu J non nul existe entre les deux conduites et tout risque d'adhérence et, par suite, tout risque de déchirure au démontage d'au moins une des conduites, sont supprimés.

Par ailleurs, chaque joint est simple à remplacer lors d'une opération de maintenance.

Selon un second mode de réalisation de ce dispositif de raccordement démontable 50 représenté sur la figure 4, le dispositif de raccordement démontable 50 comporte un second moyen de solidarisation entre chaque conduite 11,21 et chaque embase 51,52. Ce second moyen de solidarisation est utilisé en complément du premier moyen de solidarisation utilisé pour le premier mode de réalisation. Ce second moyen de solidarisation consiste en un collier de serrage 61,62 mis en place autour de chaque conduite 11,21, chaque embase 51,52 étant positionnée respectivement à l'intérieur de chaque conduite 11,21. L'utilisation de ce collier de serrage 61,62 implique que chaque embase 51,52 soit rigide.

De plus, l'embase 52 solidaire de la conduite 21 a une longueur suffisante pour permettre d'une part la mise en place du collier de serrage 62 autour de ladite conduite 21 et d'autre part que l'embase 52 dépasse de part et d'autre d'un orifice de la cloison structurelle 3. Par suite, lors d'un déplacement de cette conduite 21 ou bien de la déformation de la cloison structurelle 3 consécutif par exemple à un accident de l'aéronef 1, la rigidité de cette embase 52 permet lors d'un contact ou bien d'un choc entre cette conduite 21 et cette cloison structurelle 3 d'éviter la détérioration, voire la destruction de cette conduite 21.

Naturellement, la présente invention est sujette à de nombreuses variations conformes aux revendications quant à sa mise en oeuvre.

## Revendications

1. Système de stockage de carburant (9) comportant au moins deux réservoirs (10,20,30) et au moins un dispositif de raccordement démontable (50), chaque réservoir (10,20,30) disposant d'au moins une conduite (11,21,31) souple, chaque dispositif de raccordement démontable (50) reliant deux réservoirs (10,20,30) par l'intermédiaire de deux desdites conduites (11,21,31), ledit dispositif de raccordement démontable (50) comportant deux embases (51,52), chaque embase (51,52) étant apte à être solidarisée par au moins un moyen de solidarisation respectivement avec une desdites conduites (11,21), ledit dispositif de raccordement démontable (50) étant situé à l'intérieur d'un desdits deux réservoirs (10,20,30) qu'il relie,
**caractérisé en ce que** lesdites embases (51,52) sont assemblées mécaniquement l'une à l'autre par au moins un moyen de fixation démontable (54), au moins un joint (53) assurant l'étanchéité entre lesdites embases (51,52).

2. Système de stockage de carburant (9) selon la revendication 1,
**caractérisé en ce que** chaque embase (51,52) a une forme cylindrique, lesdites conduites (11,21) étant cylindriques.

3. Système de stockage de carburant (9) selon l'une quelconque des revendications 1 à 2,
**caractérisé en ce que** ledit moyen de fixation démontable (54) permet l'assemblage mécanique desdites embases (51,52) l'une à l'autre par une vis.

4. Système de stockage de carburant (9) selon l'une quelconque des revendications 1 à 3,
**caractérisé en ce qu'**au moins une des deux embases (51,52) comporte au moins une gorge (55) pour loger ledit joint (53).

5. Système de stockage de carburant (9) selon l'une quelconque des revendications 1 à 4,
**caractérisé en ce qu'**au moins un joint (53) est un joint torique.

6. Système de stockage de carburant (9) selon l'une quelconque des revendications 1 à 5,
**caractérisé en ce qu'**au moins un joint (53) est un joint plat.

7. Système de stockage de carburant (9) selon l'une quelconque des revendications 1 à 6,
**caractérisé en ce qu'**au moins une desdites embases (51,52) est rigide.

8. Système de stockage de carburant (9) selon la revendication 7,
**caractérisé en ce qu'**au moins une desdites embases (51,52) est métallique.

9. Système de stockage de carburant (9) selon l'une quelconque des revendications 1 à 8,
**caractérisé en ce qu'**une desdites embases (51,52) a une longueur suffisante afin d'assurer la rigidité dudit dispositif de raccordement démontable (50).

10. Système de stockage de carburant (9) selon l'une quelconque des revendications 1 à 9,
**caractérisé en ce qu'**un premier moyen de solidarisation entre une embase (51,52) et une conduite (11,21,31) est un collage (60).

11. Système de stockage de carburant (9) selon l'une quelconque des revendications 1 à 10,
**caractérisé en ce qu'**un second moyen de solidarisation entre une embase (51,52) et une conduite (11,21,31) est au moins un collier de serrage (61,62).

12. Système de stockage de carburant (9) selon l'une quelconque des revendications 1 à 11,
**caractérisé en ce qu'**un jeu (J) non nul existe entre lesdites deux conduites (11,21,31) reliées par ledit dispositif de raccordement démontable (50).

13. Système de stockage de carburant (9) selon l'une quelconque des revendications 1 à 12,
**caractérisé en ce que**, ledit système de stockage de carburant (9) comportant au moins deux compartiments (4,5,6) et au moins une cloison structurelle (3), chaque compartiment (4,5,6) comportant au moins un réservoir (10,20,30) et deux compartiments (4,5,6) étant séparés par une cloison structurelle (3), une desdites embases (51,52) a une longueur suffisante afin de dépasser de part et d'autre d'un orifice de ladite cloison structurelle (3) à travers laquelle passe une desdites conduites (11,21,31).

14. Aéronef (1) comportant au moins deux compartiments (4,5,6) séparés par au moins une cloison structurelle (3),
**caractérisé en ce que** ledit aéronef (1) comporte un système de stockage de carburant (9) selon l'une quelconque des revendications 1 à 13, au moins deux compartiments (4,5,6) comportant au moins un réservoir (10,20,30).

15. Aéronef (1) selon la revendication 14,
**caractérisé en ce que** ledit aéronef (1) comporte une structure inférieure (2) et un plancher (7) recouvrant ladite structure inférieure (2), lesdits compartiments (4,5,6) et chaque cloison (3) étant situés dans ladite structure inférieure (2).

## Patentansprüche

1. Kraftstofflagerungssystem (9) mit mindestens zwei Tanks (10, 20, 30) und mindestens einer abmontierbaren Verbindungsvorrichtung (50), wobei jeder Tank mindestens eine flexible Leitung (11, 21, 31) aufweist, wobei jede abmontierbare Verbindungsvorrichtung (50) zwei Tanks (10, 20, 30) über zwei dieser Leitungen (11, 21, 31) verbindet, wobei die abmontierbare Verbindungsvorrichtung (50) zwei Flansche (51, 52) aufweist, wobei jeder Flansch (51, 52) durch mindestens ein Befestigungsmittel jeweils mit einer der Leitungen (11, 21) fest verbunden werden kann, wobei die abmontierbare Verbindungsvorrichtung (50) im Inneren eines der beiden Tanks (10, 20, 30), die sie verbindet, angeordnet ist,
**dadurch gekennzeichnet, dass** die Flansche (51, 52) mechanisch durch mindestens ein abmontierbares Befestigungsmittel (54) aneinandergefügt sind, wobei mindestens eine Dichtung (53) die Dichtheit zwischen den Flanschen (51, 52) sicherstellt.

2. Kraftstofflagerungssystem (9) nach Anspruch 1,
**dadurch gekennzeichnet, dass** jeder Flansch (51, 52) die Form eines Zylinders aufweist, wobei die Leitungen (11, 21) zylinderförmig sind.

3. Kraftstofflagerungssystem (9) nach einem der Ansprüche 1 bis 2, **dadurch gekennzeichnet, dass** das abmontierbare Befestigungsmittel (54) ein mechanisches Aneinanderfügen der Flansche (51, 52) mit einer Schraube erlaubt.

4. Kraftstofflagerungssystem (9) nach einem der Ansprüche 1 bis 3, **dadurch gekennzeichnet, dass** mindestens zwei Flansche (51, 52) mindestens eine Nut (55) zur Lagerung der Dichtung (53) aufweisen.

5. Kraftstofflagerungssystem (9) nach einem der Ansprüche 1 bis 4, **dadurch gekennzeichnet, dass** mindestens eine Dichtung (53) eine Ringdichtung ist.

6. Kraftstofflagerungssystem (9) nach einem der Ansprüche 1 bis 5, **dadurch gekennzeichnet, dass** mindestens eine Dichtung (53) eine flache Dichtung ist.

7. Kraftstofflagerungssystem (9) nach einem der Ansprüche 1 bis 6, **dadurch gekennzeichnet, dass** mindestens einer der Flansche (51, 52) steif ist.

8. Kraftstofflagerungssystem (9) nach Anspruch 7,
**dadurch gekennzeichnet, dass** mindestens einer der Flansche (51, 52) aus Metall besteht.

9. Kraftstofflagerungssystem (9) nach einem der Ansprüche 1 bis 8, **dadurch gekennzeichnet, dass** einer der Flansche (51, 52) eine ausreichende Länge aufweist, um die Steifigkeit der abmontierbaren Verbindungsvorrichtung (5) zu gewährleisten.

10. Kraftstofflagerungssystem (9) nach einem der Ansprüche 1 bis 9, **dadurch gekennzeichnet, dass** ein erstes Mittel zur festen Verbindung zwischen einem Flansch (51, 52) und einer Leitung (11, 21, 31) eine Verleimung (60) ist.

11. Kraftstofflagerungssystem (9) nach einem der Ansprüche 1 bis 10, **dadurch gekennzeichnet, dass** ein zweites Mittel zur festen Verbindung zwischen einem Flansch (51, 52) und einer Leitung (11, 21, 31) mindestens eine Klemmschelle (61, 62) ist.

12. Kraftstofflagerungssystem (9) nach einem der Ansprüche 1 bis 11, **dadurch gekennzeichnet, dass** ein Spiel (J) ungleich Null zwischen den beiden Leitungen (11, 21, 31), die durch die abmontierbare Verbindungsvorrichtung (50) verbunden sind, besteht.

13. Kraftstofflagerungssystem (9) nach einem der Ansprüche 1 bis 12, **dadurch gekennzeichnet, dass** das Kraftstofflagerungssystem (9) mindestens zwei Kammern (4, 5, 6) und mindestens eine strukturelle Trennwand (3) aufweist, wobei jede Kammer (4, 5, 6) mindestens einen Tank (10, 20, 30) aufweist, und wobei zwei Kammern (4, 5, 6) durch eine strukturelle Trennwand (3) getrennt sind, wobei einer der Flansche (51, 52) eine ausreichende Länge aufweist, um zu beiden Seiten einer Öffnung in der strukturellen Trennwand (3), durch die eine der Leitungen (11, 21, 31) verläuft, überzustehen.

14. Luftfahrzeug (1) mit mindestens zwei durch mindestens eine strukturelle Trennwand (3) getrennten Kammern (4, 5, 6),
**dadurch gekennzeichnet, dass** das Luftfahrzeug (1) ein Kraftstofflagerungssystem (9) nach einem der Ansprüche 1 bis 13 aufweist, wobei mindestens zwei Kammern (4, 5, 6) mindestens einen Tank (10, 20, 30) aufweisen.

15. Luftfahrzeug (1) nach Anspruch 14,
**dadurch gekennzeichnet, dass** das Luftfahrzeug (1) einen unteren Aufbau (2) und einen Boden (7), der den unteren Aufbau (2) bedeckt, aufweist, wobei die Kammern (4, 5, 6) und jede Trennwand (3) in dem unteren Aufbau (2) angeordnet sind.

## Claims

1. Fuel storage system (9) having at least two tanks (10, 20, 30) and at least one dismantlable connection device (50), each tank (10, 20, 30) being equipped with at least one flexible line (11, 21, 31), each dismantlable connection device (50) connecting two tanks (10, 20, 30) via two of said lines (11, 21, 31), said dismantlable connection device (50) having two connectors (51, 52), each connector (51, 52) being able to be secured by at least one securing means respectively to one of said lines (11, 21), said dismantlable connection device (50) being located inside one of said two tanks (10, 20, 30) that it connects, **characterized in that** said connectors (51, 52) are mechanically assembled to one another by at least one dismantlable fastening means (54), at least one seal (53) ensuring leaktightness between said connectors (51, 52).

2. Fuel storage system (9) according to claim 1, **characterized in that** each connector (51, 52) has a cylindrical shape, said lines (11, 21) being cylindrical.

3. Fuel storage system (9) according to any one of claims 1 to 2, **characterized in that** said dismantlable fastening means (54) makes it possible for said connectors (51, 52) to be mechanically assembled to one another by a screw.

4. Fuel storage system (9) according to any one of claims 1 to 3, **characterized in that** at least one of the two connectors (51, 52) has at least one groove (55) for accommodating said seal (53).

5. Fuel storage system (9) according to any one of claims 1 to 4, **characterized in that** at least one seal (53) is an 0-ring seal.

6. Fuel storage system (9) according to any one of claims 1 to 5, **characterized in that** at least one seal (53) is a flat seal.

7. Fuel storage system (9) according to any one of claims 1 to 6, **characterized in that** at least one of said connectors (51, 52) is rigid.

8. Fuel storage system (9) according to claim 7, **characterized in that** at least one of said connectors (51, 52) is made of metal.

9. Fuel storage system (9) according to any one of claims 1 to 8, **characterized in that** one of said connectors (51, 52) has a length sufficient to ensure the rigidity of said dismantlable connection device (50).

10. Fuel storage system (9) according to any one of claims 1 to 9, **characterized in that** a first securing means for securing a connector (51, 52) to a line (11, 21, 31) is an adhesive bond (60).

11. Fuel storage system (9) according to any one of claims 1 to 10, **characterized in that** a second securing means for securing a connector (51, 52) to a line (11, 21, 31) is at least one clamping collar (61, 62).

12. Fuel storage system (9) according to any one of claims 1 to 11, **characterized in that** a non-zero clearance (J) exists between said two lines (11, 21, 31) connected by said dismantlable connection device (50).

13. Fuel storage system (9) according to any one of claims 1 to 12, **characterized in that**, said fuel storage system (9) having at least two compartments (4, 5, 6) and at least one structural partition (3), each compartment (4, 5, 6) having at least one tank (10, 20, 30), and two compartments (4, 5, 6) being separated by a structural partition (3), one of said connectors (51, 52) has a length sufficient to project on either side of an orifice of said structural partition (3), through which orifice one of said lines (11, 21, 31) passes.

14. Aircraft (1) having at least two compartments (4, 5, 6) separated by at least one structural partition (3), **characterized in that** said aircraft (1) has a fuel storage system (9) according to any one of claims 1 to 13, at least two compartments (4, 5, 6) having at least one tank (10, 20, 30).

15. Aircraft (1) according to claim 14, **characterized in that** said aircraft (1) has a lower structure (2) and a floor (7) covering said lower structure (2), said compartments (4, 5, 6) and each partition (3) being located in said lower structure (2).
